# EUROPÄISCHE PATENTSCHRIFT

(11) **EP 2 371 051 B1**
(45) Veröffentlichungstag und Bekanntmachung des Hinweises auf die Patenterteilung: **25.06.2014**
(21) Anmeldenummer: 09748276.4
(22) Anmeldetag: 19.10.2009
(51) Int. Cl.: H02K 11/00, H02P 6/00

(54) **Verbrennungsmotor mit einer Nockenwellenversteller zur Verstellung einer relativen Drehwinkellage zweier Wellen und Verfahren zum Betrieb eines Aktuators eines Nockenwellenverstellers eines Verbrennungsmotors**
IC engine with a camshaft adjuster for adjusting a relative rotational angle position of two shafts and method for operating an actuator of a camshaft adjuster of a IC engine
Moteur à explosion avec un déphaseur d'arbre à came destiné à régler une position angulaire relative de deux arbres et un procédé de positionnement d'un actionneur d'un déphaseur d'arbre à came d'un moteur à explosion

(30) Priorität: 25.11.2008 DE 102008059005
(43) Veröffentlichungstag der Anmeldung: 05.10.2011
(73) Patentinhaber: Schaeffler Technologies GmbH & Co. KG, 91074 Herzogenaurach (DE)
(72) Erfinder: SCHÄFER, Jens, 91074 Herzogenaurach (DE); STEIGERWALD, Martin, 91074 Herzogenaurach (DE)
(86) Internationale Anmeldenummer: PCT/EP2009/063648
(87) Internationale Veröffentlichungsnummer: WO 2010/060691

(56) Entgegenhaltungen:
- EP-A- 1 071 194
- EP-A- 1 672 777
- WO-A-2004/035997
- DE-A1- 10 315 871
- DE-A1-102005 021 726
- JP-A- 2006 166 666
- JP-A- 2006 223 037
- JP-A- 2008 278 596

## Beschreibung

### Gebiet der Erfindung

Die Erfindung betrifft einen Verbrennungsmotor mit einem Nockenwellensteller zum Verstellen der relativen Drehwinkellage zweier Wellen eines Dreiwellengetriebes mittels eines elektrischen Verstellmotors, welcher eine Verstellwelle verstellt. Daneben betrifft die Erfindung ein Verfahren zum Betrieb eines Aktuators eines Nockenwellverstellers.

Die Erfindung bezieht sich auf elektromechanische Nockenwellenversteller und wird nachfolgend anhand eines solchen erläutert. Das erfindungsgemäße Verfahren kann aber auch bei anderen Aktuatoren, wie beispielsweise bei Bürstenmotoren oder Elektromagneten verwendet werden.

Aus der WO 2004/035997 A1 ist ein elektromechanischer Nockenwellenversteller bekannt, bei welchem das Verstellgetriebe ein Doppelexzentergetriebe und ein Doppelplanetengetriebe umfasst. Durch die Verwendung dieser Verstellgetriebe mit hoher Untersetzung kann als Verstellmotor ein kompakter schnell laufender bürstenloser Gleichstrommotor mit hochinduktivem Dauermagnetrotor verwendet werden. Der Verstellmotor kann in den Nockenwellenversteller integriert oder separat ausgeführt sein.

Aus JP 2008 278 596 ist ein bürstenloser Gleichstrommotor mit einem Temperatursensor zur Erfassung der Wicklungstemperatur des Motors nach dem Oberbegriff des Anspruchs 1 bekannt. Der bürstenlose Gleichstrommotor umfasst ferner eine Steuerungseinrichtung, mit der die effektive Wicklungsspannung ab Überschreitung eines Temperaturschwellwertes mit steigender Wicklungstemperatur reduziert wird.

Aus der EP 1 672 777 A2 ist eine Vorrichtung zur Betätigung von Komponenten eines Kraftfahrzeugs bekannt, welche wenigstens einen Elektromotor aufweisen. Für den Elektromotor ist wenigstens eine Ansteuereinrichtung mit wenigstens einer Logikeinrichtung und wenigstens einer Leistungseinrichtung bekannt. Die Betätigungsvorrichtung kann über wenigstens einen einzelnen Zustandssteuerungseingang von einem ersten Zustand in wenigstens einen zweiten Zustand überführt werden, wobei sich besagter Zustand insbesondere durch die Temperatur des Motors charakterisieren lässt, Die Betätigungsvorrichtung kann insbesondere zum Betätigen eines Nockenwellenverstellsystems verwendet werden.

Elektromechanische Nockenwellenversteller in Kraftfahrzeugen werden in der Regel in einem sehr breiten Temperaturbereich von -40°C bis +120°C Umgebungstemperatur betrieben. Dabei kann es unter extremen Bedingungen, wie in sehr heißen Gegenden oder bei besonders großer Motorbelastung zu Umgebungstemperaturen am Elektromotor von bis zu 150°C kommen, wobei noch eine Temperaturerhöhung auf Grund der elektrischen und mechanischen Verlustleistung des Motors hinzu kommt,

Dies verlangt geeignete Maßnahmen, die eine Überhitzung des Elektromotors verhindern sollen, gleichzeitig aber über einen möglichst großen Temperaturbereich die volle Funktionalität der Verstellvorrichtung gewährleisten.

Der Erfindung liegt daher die Aufgabe zugrunde, einen Verbrennungsmotor mit einem Nockenwellversteller zur relativen Drehwinkelverstellung zweier Wellen mittels eines Dreiwellengetriebes zu schaffen, die eine sichere Verstellung in einem erweiterten Temperaturbereich gestattet und die bei der Gefahr der Überhitzung einzelner Bauteile einen eingestellten Drehwinkel zumindest zu halten vermag. Eine weitere Aufgabe der Erfindungbesteht darin ein Verfahren zum Betrieb eines Aktuators, eines Nockenwellenstellers zur Drehwinkelverstellung an einem Dreiwellengetriebe anzugeben, welche den Betrieb in einem großen Temperaturbereich bei hoher Betriebssicherheit gewährleistet.

Die Aufgabe wird durch einen Verbrennungsmotor mit den Merkmalen des Anspruchs 1 bzw. durch ein Verfahren mit den Merkmalen des Anspruchs 7 gelöst.

Ein erfindungsgemäße Verbrennungsmotor dient der Verstellung der relativen Drehwinkellage zweier Wellen und wird in Kraftfahrzeugen mit Verbrennungsmotoren als Nockenwellenversteller zur Verstellung der relativen Winkellage zwischen Kurbelwelle und Nockenwelle verwendet.

Die Verstellvorrichtung umfasst ein als Dreiwellengetriebe ausgeführtes Verstellgetriebe, das ein mit einer ersten Welle (Kurbelwelle) verbundenes Antriebsteil, ein mit einer zweiten Welle (Nockenwelle) verbundenes Abtriebsteil und eine mit einer Verstellmotorwelle eines elektrischen Verstellmotors drehfest verbundene Verstellwelle aufweist.

Der elektrische Verstellmotor ist vorzugsweise als bürstenloser Gleichstrommotor ausgeführt und umfasst erfindungsgemäß mindestens einen Temperatursensor.

Im einfachsten Fall erfolgt eine Abschaltung des Elektromotors bei Überhitzungsgefahr, welche durch den Temperatursensor erfasst wird.

Gemäß der Erfindung umfasst die Verstellvorrichtung eine Regeleinheit zur Regelung des Motorstromes bzw. des Tastverhältnisses in Abhängigkeit von der durch den Temperatursensor ermittelten Temperatur im Verstellmotor bzw. Aktuator.

In einem erfindungsgemäßen Verfahren wird zunächst ein aktueller Temperaturwert mittels des Temperatursensors ermittelt. Dieser Temperaturwert wird in der Regeleinheit mit verschiedenen Temperaturgrenzwerten verglichen, welche in einem für den Verstellmotor ausgelegten Bestromungsdiagramm bzw. Tastverhältnisdiagramm hinterlegt sind. In Abhängigkeit von dem Vergleichsergebnis wird der maximale Stromwert bzw. das maximale Tastverhältnis, bei dem eine Überhitzung ausgeschlossen werden kann, zum weiteren Betrieb des Verstellmotors vorgegeben und durch die Regeleinheit geregelt.

Die Erfassung der Temperatur kann in festen oder variablen Intervallen erfolgen, deren Länge von der aktuellen Temperatur abhängig ist.

Die verschiedenen Temperaturgrenzwerte definieren verschiedene Betriebszustände. Bis zum Erreichen eines ersten Temperaturgrenzwertes erfolgt ein normaler Betrieb des Verstellmotors. Ab dem Erreichen eines kritischen Temperaturgrenzwertes erfolgt eine Abschaltung des Verstellmotors, um eine Überhitzen und die Zerstörung zu verhindern.

In dem Bereich zwischen dem ersten Temperaturgrenzwert und dem kritischen Temperaturgrenzwert können je nach verwendetem Motor oder Aktuator verschiedene Reglermechanismen realisiert werden, die beispielsweise die Verstellgeschwindigkeit einschränken, um die Wärmeentwicklung im Verstellmotor zu reduzieren. Sinkt die Temperatur im Verstellmotor wieder unter einen bestimmten Grenzwert, so kann die Bestromung wieder entsprechend angepasst werden, bis der Normalbetrieb ohne Stromlimitierung erneut möglich ist.

Im Bestromungsdiagramm bzw. Tastverhältnisdiagramm sind Betriebsmodi für unterschiedliche Temperaturbereiche des Motors oder Aktuators hinterlegt. Beispielsweise kann in bestimmten Temperaturbereichen eine lineare, degressive oder progressive (oder entsprechend einer anderen Funktion) Absenkung des Motorstroms erfolgen, in anderen Bereichen eine Limitierung auf einen konstanten Motorstrom.

Die Vorteile der Erfindung sind insbesondere darin zu sehen, dass der Verstellmotor oder Aktuator sicher an die Temperaturgrenzen "herangefahren" werden kann und somit auch bei erhöhten Temperaturen ein optimaler Betrieb gewährleistet werden kann.

Der Temperatursensor kann vorteilhafterweise als temperaturabhängiger Widerstand, hier als Heißleiter oder Kaltleiter ausgeführt sein. Bei einer solchen Ausführung wird der Temperatursensor entweder mit einer konstanten Spannung beaufschlagt und der jeweilige Strom gemessen oder alternativ mit einem konstanten Strom versorgt und die Spannung gemessen. Durch Verrechnung von Strom und Spannung erhält man den aktuellen Widerstand des Temperatursensors. Über eine Widerstands-Temperatur-Kennlinie lässt sich die aktuelle Temperatur ermitteln.

Es können aber ebenso andere Bauteile, die ein temperaturabhängiges Signal liefern, wie beispielsweise Halbleiter-Temperatursensoren, Wärmefühler mit Schwingquarz, Thermoelemente oder andere Temperatursensoren verwendet werden. Der Temperatursensor ist vorzugsweise direkt benachbart zu den temperaturkritischen Bauteilen (z.B. Hallsensoren) oder der heißesten Stelle (z.B. Motorwicklung) im Verstellmotor angeordnet.

Die Regeleinheit kann im Verstellmotor integriert oder separat als Bauteil der Verstellvorrichtung ausgeführt sein.

Eine besonders bevorzugte Ausführungsform der Erfindung wird nachfolgend anhand der Figuren näher erläutert.

Es zeigen:
- Fig. 1: räumliche Ansichten von zwei Ausführungsformen der Platine eines Verstellmotors mit jeweils einem Temperatursensor;
- Fig. 2: eine räumliche Ansicht eines Stators eines Verstellmotors;
- Fig. 3: ein Bestromungsdiagramm für ein erfindungsgemäßes Verfahren zur temperaturabhängigen Regelung der Bestromung eines Verstellmotors, einer Verstellvorrichtung oder eines Aktuators.

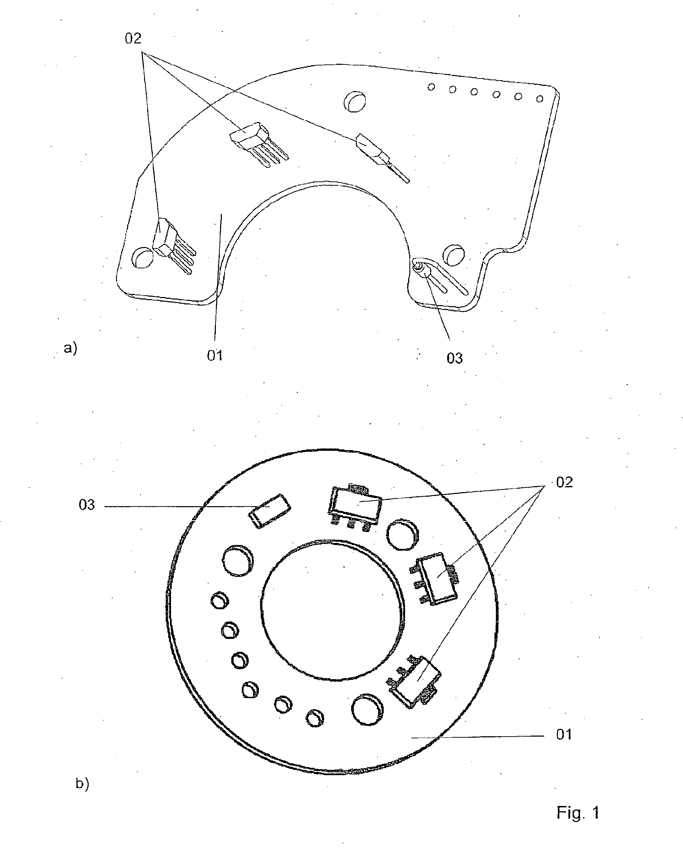

Fig. 1 zeigt in räumlichen Ansichten zwei Ausführungsformen einer Platine 01 eines bürstenlosen Gleichstrommotors mit elektronischer Kommutierung. Auf der Platine 01 solcher Motoren ist gewöhnlich die Kommutierungselektronik untergebracht. Dabei zeigt Abbildung a) eine Ausführung mit bedrahteten Bauelementen, während in Abb. b) eine Platine mit SMD-Bauelementen dargestellt ist.

Auf der Platine 01 sind winkelversetzt drei Hallsensoren 02 als magnetische Sensoren angeordnet. Diese dienen in bekannter Weise der Lageerfassung des Rotors zum Zwecke der elektronischen Kommutierung. Die Phasen können somit in Abhängigkeit von der Lage des Rotors geschaltet werden. Die Positionsdetektion kann in anderen Stellermotoren auch mittels elektrischer (Potentiometer) oder optischer Positionssensoren erfolgen. Auch auf solche anderen Stellermotoren ist die Erfindung anwendbar.

Ein Temperatursensor 03 ist ebenfalls auf der Platine 01 angeordnet. In der dargestellten Ausführungsform ist der Temperatursensor 03 benachbart zu den temperaturkritischen Hallsensoren 02 angeordnet. Er ist mit einer nicht dargestellten Regelungseinheit verbunden, welche innerhalb oder außerhalb des Verstellmotors angeordnet sein kann.

Die Platine kann hierbei als PCB (printed circuit board) oder als Keramik ausgeführt sein.

Als Vibrationsschutz kann insbesondere bei der bedrahteten Ausführung (Abb. a) der Temperatursensor 03 mit einem Halter auf der Platine 01 oder in einer entsprechenden Aufnahme im Stator fixiert werden. Alternativ kann eine Fixierung durch ein Vergießen des Temperatursensors 03 bzw. der Sensorbeine erfolgen.

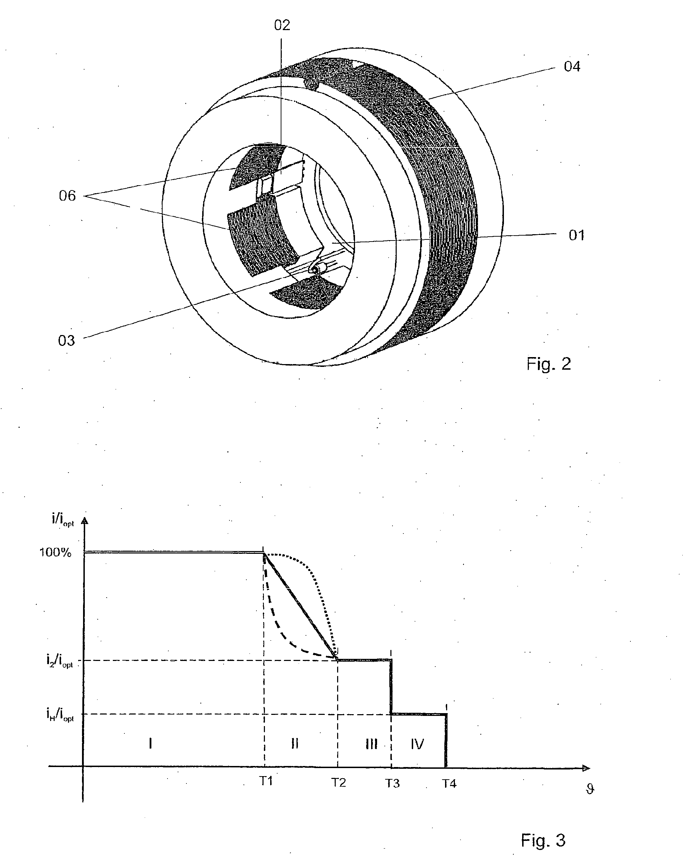

In Fig. 2 ist eine räumliche Darstellung eines Stators 04 eines bürstenlosen, elektronisch kommutierten Verstellmotors gezeigt. Die Platine 01 in der Ausführung mit bedrahteten Bauelementen ist derart am Stator 04 befestigt, dass die Hallsensoren 02 und der Temperatursensor 03 zwischen Statorzähnen 06 angeordnet sind. Diese Anordnung ist besonders bauraumsparend und kann in bestehende Motorkonzepte integriert werden.

Fig. 3 zeigt ein Bestromungsdiagramm, welches in einer Regelungseinheit umgesetzt werden kann. Anhand dieses Bestromungsdiagramms wird nachfolgend auch ein besonders bevorzugtes Temperaturmanagement beschrieben.

Das Bestromungsdiagramm zeigt das Verhältnis vom aktuellen Motorstrom i zu Motorstrom bei optimaler Verstellperformance iₒₚₜ in Abhängigkeit von der Temperatur ϑ im Verstellmotor.

In einem Temperaturabschnitt 1 wird der Verstellmotor bis zum Erreichen eines ersten Temperaturgrenzwerts T1 im Normalbetrieb mit einem Motorstrom i (bzw. Tastverhältnis) betrieben, welcher das vollständige, uneingeschränkte Verstellverhalten am Motor gestattet.

Steigt die Temperatur ϑ im Verstellmotor über den ersten Temperaturgrenzwert T1 bis zu einem zweiten Temperaturgrenzwert T2 an (Temperaturabschnitt II), wird der Sollmotorstrom i (bzw. das Tastverhältnis) linear, degressiv oder progressiv (oder entsprechend einer anderen Funktion) zum Temperaturverlauf abgesenkt. In diesem Bereich kann bei verringertem Motorstrom ein eingeschränktes Verstellverhalten des Phasenverstellers aufrecht erhalten werden. Das heißt, das System verstellt mit reduzierter Verstellgeschwindigkeit.

Bei einem weiteren Temperaturanstieg bis zu einem dritten Temperaturgrenzwert T3 (Temperaturabschnitt III) wird der Motorstrom i (bzw. das Tastverhältnis) auf einen Wert i₂ geregelt, bei dem die Nockenwelle gerade noch verstellt werden kann. Dabei wird eine minimale Verstellgeschwindigkeit der Nockenwelle von beispielsweise 10 ° Kurbelwelle/s ermöglicht.

Wenn selbst dieser Temperaturgrenzwert T3 überschritten wird (Temperaturabschnitt IV) wird der Motor nur noch mit dem Haltestrom i_{H} (bzw. ein Haltetastverhältnis) bestromt. Dabei kann das System nicht mehr verstellt werden. Die Nockenwelle wird jedoch auf einem konstanten Verstellwinkel gehalten, der einen weiteren Betrieb des Verbrennungsmotors gestattet, wenn auch unter nicht optimalen Bedingungen.

Sofern ein weiterer Temperaturanstieg über einen vierten Temperaturgrenzwert T4 erfolgt, so wird der Elektromotor abgeschaltet um seine Zerstörung zu verhindern.

Wenn die ermittelte Temperatur die jeweiligen Temperaturgrenzwerte T4 bis T1 wieder unterschreitet, wird die Bestromung (bzw. das Tastverhältnis) wieder entsprechend angepasst, bis erneut der Normalbetrieb möglich ist. Für die Unterschreitung der Temperaturgrenzwerte können die gleichen Grenzwerte T1 bis T4, oder auch abweichende Werte im Sinne einer Temperaturhysterese vorgegeben werden, um ein "Aufschaukeln" der Regelung zu verhindern.

Der Fachmann kann das Bestromungsdiagramm auch abwandeln. Es sind selbstverständüch auch andere Möglichkeiten der Stromlimitierung (bzw. der Tastverhältnislimitierung) möglich, beispielsweise eine degressive Limitierung des Motorstromes im Temperaturbereich II. Ebenso könnte der Temperaturbereich III entfallen und die Stromlimitierung (bzw. die Tastverhältnislimitierung) bis zum Bereich des Haltestromes i_{H} (bzw. des Haltetastverhältnisses) erfolgen.

Des Weiteren kann das Aufheizen bei tiefen Temperaturen, z. B. -30°C, und hochdynamischem Betrieb überwacht werden. Bei tiefen Umgebungstemperaturen kommt es bei hochdynamischem Betrieb zu punktuellen Temperaturanstiegen, z. B. erhitzen sich die Wicklungen auf Grund des Stroms sehr schnell, während die Umgebung, z. B. Kunststoffumspritzung, noch kalt ist (großes Temperaturgefälle). Dadurch kann es auf Grund der durch die unterschiedliche Wärmedehnung entstehenden Bauteilbelastungen zu Beschädigungen am Motor kommen. Dies kann durch Temperaturüberwachung und entsprechende Bestromung vermieden werden, da so für eine gleichmäßigere Temperaturverteilung im Betrieb gesorgt werden kann (Temperaturgradientenbegrenzung).

### Bezugszeichenliste

- 01: Platine
- 02: Hallsensor
- 03: Temperatursensor
- 04: Stator
- 05: -
- 06: Statorzahn

- i: Motorstrom
- i₂: reduzierter Motorstrom
- i_{H}: Haltestrom
- iₒₚₜ: Motorstrom bei optimaler Verstellperformance

- ϑ: Temperatur im Verstellmotor

- T1: Temperaturgrenzwert, erster
- T2: Temperaturgrenzwert, zweiter
- T3: Temperaturgrenzwert, dritter
- T4: Temperaturgrenzwert, vierter

- I, II, III, IV: Temperaturbereiche

## Patentansprüche

1. Verbrennungsmotor mit einem Nockenwellenversteller zum Verstellen einer relativen Drehwinkellage zweier Wellen, mit einem als Mehrwellengetriebe ausgebildeten Verstellgetriebe, das ein mit einer ersten Welle verbundenes Antriebsteil, ein mit einer zweiten Welle verbundenes Abtriebsteil und eine mit einer Verstellmotorwelle eines elektrischen Verstellmotors drehfest verbundene Verstellwelle aufweist, wobei der Verstellmotor einen Temperatursensor (03) umfasst und die Verstellvorrichtung weiterhin eine Regelungseinheit mit einem Regler zur Bestromung des Verstellmotors in Abhängigkeit der vom Temperatursensor (03) ermittelten Temperatur umfasst, wobei die Regelungseinheit zur Durchführung folgender Verfahrensschritte ausgebildet ist:
- Ermitteln eines Temperaturwertes (T) im Verstellmotor mittels des Temperatursensors (03);
- Vergleichen des ermittelten Temperaturwertes mit hinterlegten Temperaturgrenzwerten (T1, T2, T3, T4), welche verschiedene Betriebsmodi des Verstellmotors voneinander abgrenzen;
- Regelung des Stromes (i) oder des Tastverhältnisses des Verstellmotors in Abhängigkeit vom Ergebnis des Vergleiches, um den Verstellmotor in dem Betriebsmodi zu betreiben;
wobei das Bestromungsdiagramm in Temperaturabschnitte (I, II, III, IV) eingeteilt ist, die durch die Temperaturgrenzwerte (T1, T2, T3, T4) nach oben begrenzt sind und aneinander anschließen, wobei für jeden Temperaturabschnitt (I, II, III, IV) eine separate Stromregelung oder Tastverhältnisregelung vorgesehen ist, **dadurch gekennzeichnet, dass** in dem Temperaturabschnitt (IV), der durch den zweithöchsten Temperaturgrenzwert (T3) und höchsten Temperaturgrenzwert (T4) gebildet ist, der Strom (i) bei einem Haltestrom (i_{H}) liegt, bei dem der Verstellmotor nicht mehr verstellbar ist, aber auf einer konstanten Position gehalten wird,

2. Verbrennungsmotor nach Anspruch 1, **dadurch gekennzeichnet, dass** der Temperatursensor (03) ein Kaltleiter oder ein Heißleiter ist.

3. Verbrennungsmotor nach einem der Ansprüche 1 bis 2, **dadurch gekennzeichnet, dass** der Temperatursensor (03) benachbart zu temperaturkritischen Bauteilen und/oder an der heißesten Stelle im Verstellmotor angeordnet ist.

4. Verbrennungsmotor nach einem der Ansprüche 1 bis 3, **dadurch gekennzeichnet, dass** der Verstellmotor ein bürstenloser Gleichstrommotor ist mit einem Rotor und einem Stator (04), welcher zur Kommutierung mindestens einen auf einer Platine (01) angeordneten Hallsensor (02) umfasst, wobei der Temperatursensor (03) benachbart zum Hallsensor (02) auf der Platine (01) angeordnet ist.

5. Verbrennungsmotor nach Anspruch 4, **dadurch gekennzeichnet, dass** der Temperatursensor (03) schwingungsentkoppelt mit einem Halter auf der Platine (01) oder am Stator (04) fixiert ist.

6. Verbrennungsmotor nach einem der Ansprüche 1 bis 5, **dadurch gekennzeichnet, dass** die im Verstellmotor integrierten Sensoren (02, 03) als oberflächenmontierbare Bauteile (SMD) und/oder als bedrahtete Bauteile (THT) ausgeführt sind.

7. Verfahren zur temperaturabhängigen Regelung einer Bestromung eines Aktuatorseines Verbrennungsmotors mit einem Nockenwellenversteller folgende Schritte umfassend:
- Ermitteln eines Temperaturwertes (T) im Aktuator mittels eines Temperatursensors (03);
- Vergleichen des ermittelten Temperaturwertes mit hinterlegten Temperaturgrenzwerten (T1, T2, T3, T4), welche verschiedene Betriebsmodi des Aktuators voneinander abgrenzen;
- Regelung des Stromes (i) oder des Tastverhältnisses des Verstell-motors in Abhängigkeit vom Ergebnis des Vergleiches, um den Aktuator in den Betriebsmodi zu betreiben;
wobei das Bestromungsdiagramm in Temperaturabschnitte (I, II, III, IV) eingeteilt ist, die durch die Temperaturgrenzwerte (T1, T2, T3, T4) nach oben begrenzt sind und aneinander anschließen, , wobei für jeden Temperaturabschnitt (I, II, III, IV) eine separate Stromregelung oder Tastverhältnisregelung vorgesehen ist, **dadurch gekennzeichnet dass** in dem Temperaturabschnitt (IV) oberhalb des dritten Temperaturgrenzwertes (T3) bis zum Erreichen des vierten Temperaturgrenzwertes (T4) der Strom (i) bei einem Haltestrom (i_{H}) liegt, bei dem der Aktuator nicht mehr verstellbar ist aber auf einer konstanten Position gehalten wird.

8. Verfahren nach Anspruch 7, **dadurch gekennzeichnet, dass** die Regelung des Stromes (i) oder des Tastverhältnisses des Verstellmotors bei Überschreitung- eines ersten Temperaturgrenzwertes (T1) erfolgt.

9. Verfahren nach einem der Ansprüche 7 oder 8, **dadurch gekennzeichnet, dass** in dem Temperaturabschnitt (II) oberhalb des ersten Temperaturgrenzwertes (T1) bis zum Erreichen des zweiten Temperaturgrenzwertes (T2) eine lineare, degressive oder progressive Reduzierung des Stromes (i) oder des Tastverhältnisses erfolgt, woraus sich eine reduzierte Verstellgeschwindigkeit und/oder Verstellgröße des Aktuators ergibt.

10. Verfahren nach einem der Ansprüche 7 bis 9, **dadurch gekennzeichnet, dass** in dem Temperaturabschnitt (III) oberhalb des zweiten Temperaturgrenzwertes (T2) bis zum Erreichen des dritten Temperaturgrenzwertes (T3) der Strom (i) auf einen verringerten Wert (i₂) geregelt wird, bei welchem der Aktuator noch mit minimaler Verstellgeschwindigkeit verstellbar ist.

11. Verfahren nach einem der Ansprüche 7 bis 10, **dadurch gekennzeichnet, dass** oberhalb des vierten Temperaturgrenzwertes (T4) der Elektromotor abgeschaltet wird, um seine Zerstörung zu verhindern.

12. Verfahren nach einem der Ansprüche 7 bis 11 , **dadurch gekennzeichnet, dass** bei Temperaturen unter oder um 0 °C eine Temperaturgradientenbegrenzung durchgeführt wird, um eine Zerstörung des Elektromotors zu verhindern.

## Claims

1. IC engine with a camshaft adjuster for adjusting a relative rotational angle position of two shafts, with an adjustment gear mechanism which is embodied as a multi-shaft gear mechanism and which has a drive part which is connected to a first shaft, an output part which is connected to a second shaft and an adjustment shaft which is connected in rotation to an adjustment motor shaft of an electric adjustment motor, wherein the adjustment motor comprises a temperature sensor (03) and the adjustment device also comprises a control unit with a controller for energizing the adjustment motor as a function of the temperature determined by the temperature sensor (03), wherein the control unit is designed to carry out the following method steps:
- determining a temperature value (T) in the adjustment motor by means of the temperature sensor (03);
- comparing the determined temperature value with stored temperature limiting values (T1, T2, T3, T4) which delimit various operating modes of the adjustment motor from one another;
- controlling the current (i) or the pulse duty factor of the adjustment motor as a function of the result of the comparison in order to operate the adjustment motor in the operating modes;
wherein the energization diagram is divided into temperature sections (I, II, III, IV) which are limited upwardly by the temperature limiting values (T1, T2, T3, T4) and adjoin one another, wherein a separate current control or pulse duty factor control is provided for each temperature section (I, II, III, IV), **characterized in that** in the temperature section (IV) which is formed by the second highest temperature limiting value (T3) and the highest temperature limiting value (T4) the current (i) is at a holding current (i_{H}) at which the adjustment motor can no longer be adjusted but is held at a constant position.

2. IC engine according to Claim 1, **characterized in that** the temperature sensor (03) is a PTC thermistor or an NTC thermistor.

3. IC engine according to one of Claims 1 to 2, **characterized in that** the temperature sensor (03) is arranged adjacent to temperature-critical components and/or at the hottest location in the adjustment motor.

4. IC engine according to one of Claims 1 to 3, **characterized in that** the adjustment motor is a brushless DC motor with a rotor and a stator (04) which comprises for the purpose of commutation at least one Hall sensor (02) arranged on a circuit board (01), wherein the temperature sensor (03) is arranged adjacent to the Hall sensor (02) on the circuit board (01).

5. IC engine according to Claim 4, **characterized in that** the temperature sensor (03) is secured in a vibration-isolated fashion with a holder on the circuit board (01) or on the stator (04).

6. IC engine according to one of Claims 1 to 5, **characterized in that** the sensors (02, 03) which are integrated in the adjustment motor are embodied as surface-mountable components (SMD) and/or as wired components (THT).

7. Method for performing temperature-dependent control of an energization of an actuator of its internal combustion engine with a camshaft adjuster comprising the following steps:
- determining a temperature value (T) in the actuator by means of a temperature sensor (03);
- comparing the determined temperature value with stored temperature limiting values (T1, T2, T3, T4) which delimit various operating modes of the actuator from one another;.
- controlling the current (i) or the pulse duty factor of the adjustment motor as a function of the result of the comparison in order to operate the actuator in the operating modes;
wherein the energization diagram is divided into temperature sections (I, II, III, IV) which are limited upwardly by the temperature limiting values (T1, T2, T3, T4) and adjoin one another, wherein a separate current control or pulse duty factor control is provided for each temperature section (I, II, III, IV), **characterized in that** in the temperature section (IV) above the third temperature limiting value (T3) until the fourth temperature limiting value (T4) is reached the current (i) is at a holding current (i_{H}) at which the actuator can no longer be adjusted but is held at a constant position.

8. Method according to Claim 7, **characterized in that** control of the current (i) or of the pulse duty factor of the adjustment motor occurs when a first temperature limiting value (T1) is exceeded.

9. Method according to one of Claims 7 or 8, **characterized in that** in the temperature section (II) above the first temperature limiting value (T1) until the second temperature limiting value (T2) is reached a linear, degressive or progressive reduction occurs in the current (i) or the pulse duty factor, resulting in a reduced adjustment speed and/or adjustment variable of the actuator.

10. Method according to one of Claims 7 to 9, **characterized in that** in the temperature section (III) above the second temperature limiting value (T2) until the third temperature limiting value (T3) is reached the current (i) is controlled to a reduced value (i₂) at which the actuator can still be adjusted with a minimum adjustment speed.

11. Method according to one of Claims 7 to 10, **characterized in that** above the fourth temperature limiting value (T4) the electric motor is switched off in order to prevent destruction.

12. Method according to one of Claims 7 to 11, **characterized in that** at temperatures below or at 0°C a temperature gradient limitation is carried out in order to prevent destruction of the electric motor.

## Revendications

1. Moteur à combustion interne doté d'un dispositif de réglage d'arbre à cames qui règle la position angulaire relative en rotation de deux arbres et qui présente une transmission de réglage configurée comme transmission à plusieurs arbres qui présente une partie d'entraînement raccordée à un premier arbre, une partie entraînée raccordée à un deuxième arbre et un arbre de réglage relié à rotation solidaire à un arbre moteur de réglage d'un moteur électrique de réglage,
le moteur de réglage comportant une sonde de température (03) et le dispositif de réglage comprenant en outre une unité de régulation dotée d'un régulateur qui alimente le moteur de réglage en courant en fonction de la température déterminée par la sonde de température (03), l'unité de régulation étant configurée pour exécuter les étapes de procédé suivantes :
déterminer au moyen de la sonde de température (03) la valeur de température (T) qui règne dans le moteur de réglage,
comparer la valeur de température ainsi déterminée à des valeurs limites de température (T1, T2, T3, T4) conservées en mémoire et qui délimitent les uns des autres différents modes de fonctionnement du moteur de réglage et
réguler le courant (i) ou le taux d'échantillonnage du moteur de réglage en fonction du résultat de la comparaison pour faire fonctionner le moteur de réglage dans les modes de fonctionnement,
le diagramme d'alimentation en courant étant divisé en plages de température (I, II, III, IV) limitées vers le haut par les valeurs limites (T1, T2, T3, T4) de températures et se raccordant les uns aux autres,
une régulation séparée du courant ou une régulation séparée du taux d'échantillonnage étant prévues pour chaque plage de température (I, II, III, IV),
**caractérisé en ce que**
dans la plage de température (IV) formée par la deuxième valeur limite de température (T3) la plus élevée et la valeur limite (T4) de température la plus élevée, le courant (i) est situé à un courant de maintien (i_{H}) pour lequel le moteur de réglage ne peut plus être déplacé mais est maintenu en une position constante.

2. Moteur à combustion interne selon la revendication 1, **caractérisé en ce que** la sonde de température (03) est un conducteur froid ou un conducteur chaud.

3. Moteur à combustion interne selon l'une des revendications 1 et 2, **caractérisé en ce que** la sonde de température (03) est disposée au voisinage de composants dont la température est critique et/ou en l'emplacement le plus chaud du moteur de réglage.

4. Moteur à combustion interne selon l'une des revendications 1 à 3, **caractérisé en ce que** le moteur de réglage est un moteur à courant continu sans balais, avec un rotor et un stator (04) qui comporte pour sa commutation au moins une sonde de Hall (02) disposée sur une carte de circuit (01), la sonde de température (03) étant disposée sur la carte de circuit (01) au voisinage de la sonde de Hall (02).

5. Moteur à combustion interne selon la revendication 4, **caractérisé en ce que** la sonde de température (03) est fixée sur la carte de circuit (01) ou sur le stator (04) en étant découplée des vibrations au moyen d'un support.

6. Moteur à combustion interne selon l'une des revendications 1 à 5, **caractérisé en ce que** les sondes (02, 03) intégrées dans le moteur de réglage sont configurées comme composants (SMD) aptes à être montés en surface et/ou comme composants (THT) raccordés par fils.

7. Procédé de régulation en fonction de la température de l'alimentation en courant d'un actionneur d'un moteur à combustion interne doté d'un dispositif de réglage d'arbre à cames, le procédé comportant les étapes suivantes :
détermination d'une valeur de température (T) de l'actionneur au moyen d'une sonde de température (03),
comparaison de la valeur de température ainsi déterminée à des valeurs limites de température (T1, T2, T3, T4) conservées en mémoire et qui délimitent les uns des autres différents modes de fonctionnement de l'actionneur,
régulation du courant (i) ou du taux d'échantillonnage du moteur de réglage en fonction du résultat de la comparaison pour faire fonctionner l'actionneur dans les modes de fonctionnement,
le diagramme d'alimentation en courant étant divisé en plages de température (I, II, III, IV) limitées vers le haut par les valeurs limites (T1, T2, T3, T4) de températures et se raccordant les uns aux autres,
une régulation séparée du courant ou une régulation séparée du taux d'échantillonnage étant prévues pour chaque plage de température (I, II, III, IV),
**caractérisé en ce que**
dans la plage de température (IV) formée par la deuxième valeur limite de température (T3) la plus élevée et la valeur limite (T4) de température la plus élevée, le courant (i) est situé à un courant de maintien (i_{H}) pour lequel le moteur de réglage ne peut plus être déplacé mais est maintenu en une position constante.

8. Procédé selon la revendication 7, **caractérisé en ce que** la régulation du courant (i) ou du taux d'échantillonnage du moteur de réglage s'effectue lorsqu'une première valeur limite de température (T1) est dépassée.

9. Procédé selon l'une des revendications 7 ou 8, **caractérisé en ce que** dans la plage de température (II) située au-dessus de la première valeur limite de température (T1) jusqu'à l'atteinte de la deuxième valeur limite de température (T2), une réduction linéaire, dégressive ou progressive du courant (i) ou du taux d'échantillonnage a lieu, avec pour conséquence une réduction de la vitesse de réglage et/ou de la grandeur de réglage de l'actionneur.

10. Procédé selon l'une des revendications 7 à 9, **caractérisé en ce que** dans la plage de température (III) située au-dessus de la deuxième valeur limite de température (T2) jusqu'à l'atteinte de la troisième valeur limite de température (T3), le courant (i) est régulé à une valeur réduite (i₂) pour laquelle l'actionneur ne peut être déplacé qu'à une vitesse de réglage minimale.

11. Procédé selon l'une des revendications 7 à 10, **caractérisé en ce qu'**au-dessus de la quatrième valeur limite de température (T4), le moteur électrique est débranché pour empêcher sa destruction.

12. Procédé selon l'une des revendications 7 à 11, **caractérisé en ce qu'**à des températures inférieures ou voisines de 0°C, une limitation du gradient de température a lieu pour empêcher une destruction du moteur électrique.
